# EUROPEAN PATENT SPECIFICATION

(11) **EP 4 091 961 B1**
(45) Date of publication and mention of the grant of the patent: **31.01.2024**
(21) Application number: 22170482.8
(22) Date of filing: 28.04.2022
(51) Int. Cl.: B65D 8/00, F16B 5/06, B65D 8/04

(54) **CONTAINER COMPRISING CONNECTION CLIPS FOR CONNECTING TWO ADJACENT WALLS OF THE CONTAINER**
BEHÄLTER MIT VERBINDUNGSKLAMMERN ZUM VERBINDEN ZWEIER BENACHBARTER WÄNDE DES BEHÄLTERS
RÉCIPIENT COMPRENANT DES CLIPS DE CONNEXION POUR RELIER DEUX PAROIS ADJACENTES DU RÉCIPIENT

(30) Priority: 29.04.2021 IT 202100010817
(43) Date of publication of application: 23.11.2022
(73) Proprietor: Galassi S.N.C. Di Galassi Roberto&Renzo, 60028 Osimo (AN) (IT)
(72) Inventor: GALASSI, Renzo, 60028 Osimo (AN) (IT)
(74) Representative: Baldi, Claudio

(56) References cited:
- WO-A1-2010/121561
- CH-A- 424 610
- US-A- 1 445 816

## Description

The present patent application for industrial invention relates to a container comprising connecting clips for connecting two adjacent walls of the container.

Containers of all shapes and sizes are known on the market, as inventors and designers have given full play to their imagination.

By way of example, there are plastic containers made from a single molding of plastic material.

However, the negative environmental impact of plastic has been known for a long time now.

This is why in recent years there has been a growing market demand for containers or boxes made of environmentally friendly materials, such as wood or cardboard or combinations of these.

Cardboard containers are made from a single flat cardboard blank which can be folded in such a way to go from a planar, space-saving configuration to a parallelepiped volume configuration. The container is secured in the volume configuration by means of teeth that are inserted and fixed in special slots.

However, these containers are limited by drawbacks. A first drawback is that the unfolding and folding of the blank from the planar configuration to the volume configuration and vice versa are time-consuming operations. A second disadvantage is that when these containers are in volume configuration, they are not entirely reliable, since the weight of the contents can cause the teeth to slip out of the slots, causing the blank to unfold and the contents to spill out.

On the other hand, wooden containers are made by means of a plurality of wooden panels connected to each other by means of connection means. These panels are suitable for acting as sides and walls for the container.

By way of example, the connection means used for connecting the panels of the wooden box may consist of metal screws or glues or interlocking means.

In the case where screws or glues are used, while on the one hand these connection means provide strength to the box, on the other hand they do not allow the box to be assembled and disassembled reversibly. Such an irreversibility means that, in the event of any breakage, fracture or deformation of one of the panels (which act as walls for the box), it will be necessary to dispose of the box.

Moreover, in the case where such glues are used as connection means, such a container is not environmentally friendly or environmentally compatible for disposal.

Containers with interlocking connection means (e.g. dovetails), while they allow for the reversible assembly of the box, they do not provide stability. In fact, such means are not at all reliable, since they can easily disengage from each other under the action of the thrust exerted by the objects contained in the container against the walls of the container itself, causing consequently the leakage of said products, if not their damage.

US1445816A describes a container for butter or similar foods, according to the preamble of claim 1.

WO2010121561A1 describes a removable packaging box comprising a body, an upper cover which is arranged at the upper end of the body, a lower cover which is arranged at the lower end of the body and connecting strips which are respectively connected with the upper cover and the lower cover.

CH424610A discloses a corner connection for boxes that can be dismantled.

It is an object of the present invention to devise a new container that allows two adjacent walls to be connected to each other in a stable and reversible manner.

A further scope of the present invention is to devise a container which is environmentally friendly for disposal.

Another purpose is to devise a container which is simple and quick to make.

Last but not least, the purpose is to devise a container which is extremely economical to manufacture.

These purposes are achieved in accordance with the invention with the features listed in the appended independent claim 1.

Advantageous embodiments appear from the dependent claims.

The container according to the invention is defined by claim 1.

For the sake of explanatory clarity, the description of the container according to the invention is continued by reference to the accompanying drawings, which have only illustrative and non-limiting value, wherein:
Fig. 1 is an axonometric view of a container according to the invention;
Fig. 2 is a front view illustrating in detail the connection means of the container;
Fig. 3 is a side view illustrating in detail the connection means of the container;
Fig. 4 is a front view of a fork clip of the connection means;
Fig. 5 is a side view illustrating in detail a wing of the connection means;
Fig. 6 is a sectional view of the connection means sectioned along the plane VI-VI of Fig. 2;
Fig. 6A is the same as Fig. 6 but without the fork clip of the connection means;
Fig. 7 is a sectional view of the connection means sectioned along the plane VII-VII of Fig. 2.
Fig. 7A is the same as Fig. 7 but without the fork clip of the connection means.

With reference to the attached figures, a container according to the invention is described, which is indicated by the reference number (100).

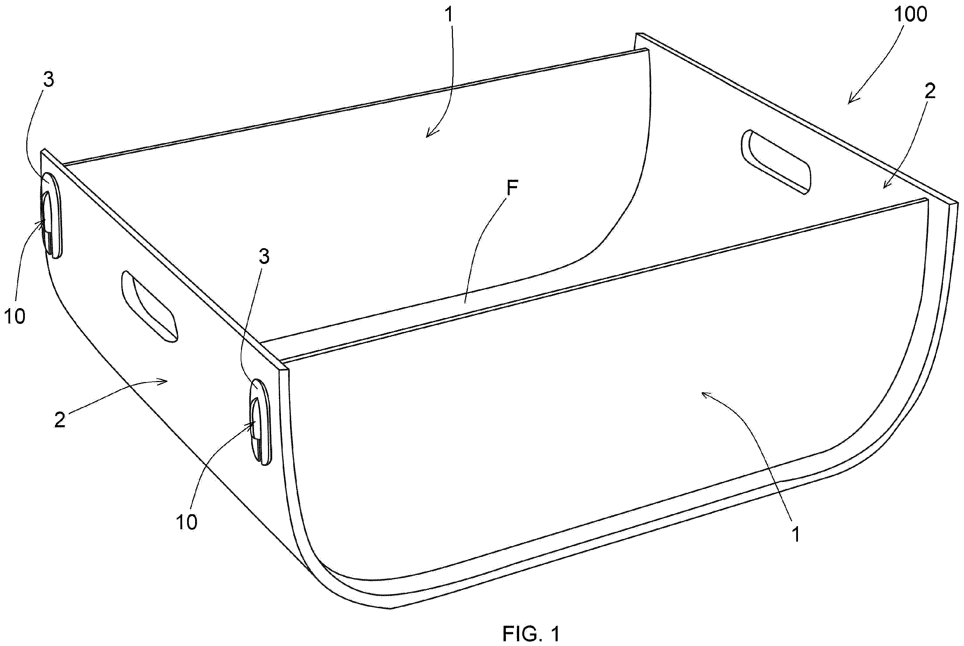

The container (100) is shown in particular in Fig. 1.

The container (100) comprises a plurality of walls delimiting a compartment.

In particular, the container (100) comprises two first side walls (1), two second side walls (2) and a bottom wall (F).

More precisely, the container (100) comprises two rigid panels defining the two first side walls (1) and a flexible sheet element folded substantially in a "U" shape defining the bottom wall (F) and the two second side walls (2).

In the preferred embodiment of the invention said first walls (1) and said second walls (2) are made of different material. The first walls (1) are made of wood, whereas the second walls (2) are made of cardboard.

More precisely, the panels defining the first walls (1) are wooden panels, whereas the flexible element folded in a "U" shape defining the bottom wall (F) and the second walls (2) is a folding cardboard blank.

A plurality of folding lines (not shown in the accompanying figures) are formed on the blank to provide flexibility to the blank and to fold it into a "U" shape.

The cardboard blank is preferably made of corrugated cardboard, but nothing would change for the purposes of the objectives pursued by the invention if said cardboard blank were made of honeycomb cardboard.

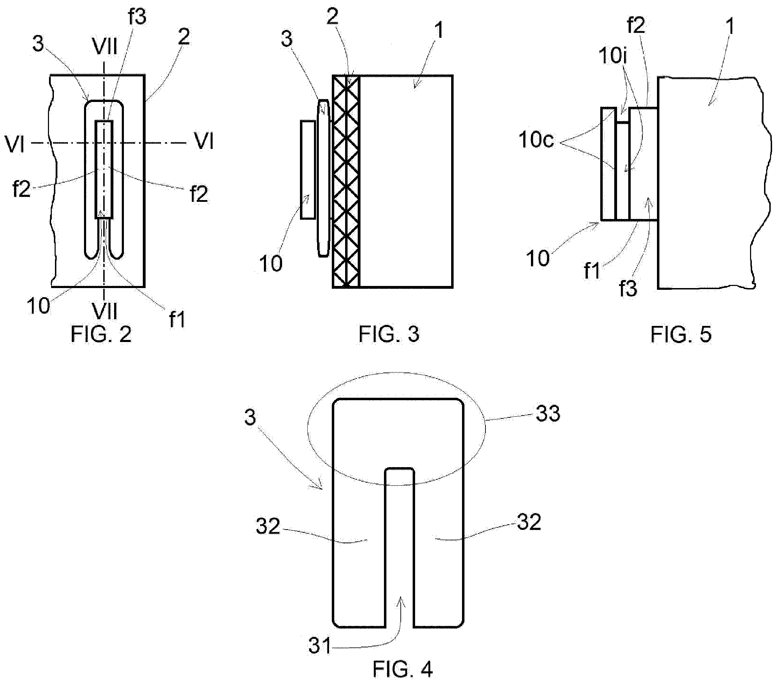

The container (100) further comprises connection means arranged between two adjacent walls (1, 2) and suitable for connecting the two walls (1, 2). The connection means are shown in particular in Figs. 2, 3 and 4.

The connection means arranged between the two adjacent walls (1, 2) comprise a slot (20) formed on the second wall (2), and a tab (10) formed on the first wall (1) and inserted into said slot (20).

With reference to Fig. 5, 6, 6A, 7 and 7A, the tab (10) comprises a first portion (10a) disposed in the slot (20) and a second ending portion (10b) protruding outside the slot (20) and comprising a tooth (10c).

The tab (10) has a substantially quadrangular shape and comprises two opposing lateral faces (f2), a top face (f3) connecting the two lateral faces (f2) at the top, and a lower face (f1) connecting the two lateral faces (f2) at the bottom.

The connection means further comprise a fork clip (3) attached to the second ending portion of the tab (10) at a position interposed between the tooth (10c) and the second wall (2). The tooth (10c) and the second wall (2) abut against two opposing faces (3a, 3b) of the forked clip (3) in such a way that the forked clip (3) prevents the tab (10) from slipping out of the slot (20).

Otherwise said, the fork clip (3) essentially acts as a clip and prevents the tab (10) from slipping out of the corresponding slot (20) in such a way that the two walls (1, 2) remain connected to each other.

Particularly, in the specific case shown in the attached figures, wherein the second walls (2) are defined by the cardboard blank, the fork clip also enables the U-folded blank to remain stable. In fact, if the U-folded blank were released from the first walls (1) (i.e. from the panels) it would unfold and return to its planar configuration.

With particular reference to Fig. 4, said clip (3) consists of a plate, preferably made of wood, comprising a notch (31) that defines two lateral prongs (32) on the fork clip (3) and a central portion (33) that connects the two lateral prongs (32).

The thickness of the plate is such that the two lateral prongs (32) can be separated slightly in an elastic manner.

Advantageously, the notch (31) has a slightly smaller width than the width of the tab (10).

In view of the above, by inserting the fork clip (3) into the tab (10), the lateral prongs (32) are spread out slightly and are fixed to the tab (10) in a stable manner.

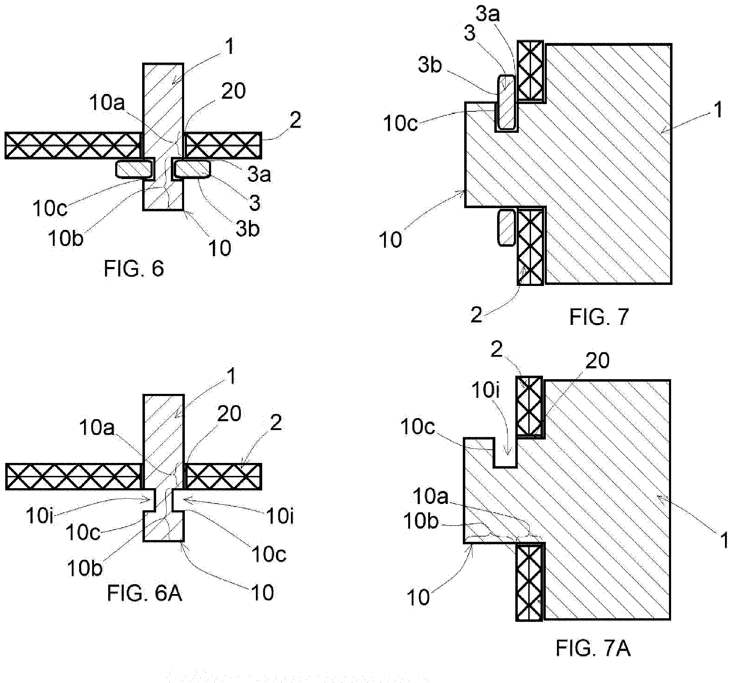

With particular reference to Figs. 6, 6A, 7 and 7A, advantageously said second ending portion (10b) comprises a recess (10i) which is defined by said tooth (10c) on one side. The fork clip (3) is partially inserted in the recess (10i).

It should be noted that Figs. 6A and 7A are substantially identical to Figs. 6 and 7, with the only difference that said fork clip (3) is omitted in order to precisely indicate the recess (10i).

In the embodiment shown in Figs. 5, 6, 7, 6A and 7A, said tooth (10c) extends uninterruptedly along the two lateral faces (f2) and along the top face (f3) of the tab (10). Similarly, also said recess (10c) extends uninterruptedly along the two lateral faces (f2) and along the top face (f3) of the tab (10).

It should be noted that even if in the attached figures said tooth (10c) and said recess (10i) extend along the two lateral faces (f2) and along the top face (f3), nothing prevents different solutions from being envisaged. By way of example, two teeth (10c) and two recesses (10i) may be obtained on the two lateral faces (f3) of the tab (10). Alternatively, the tooth (10c) and the recess (10i) may be obtained only on the top face (f3) of the tab (10).

As a result of the foregoing description, the advantages of the present invention are now apparent.

First of all, the particular conformation of the connection means allows the two walls (1, 2) to be connected or disconnected at will in an extremely simple and fast manner. In particular, in order to couple two walls (1, 2) to each other, it will be simply necessary to insert the tab (10) into the slot (20) and then insert the fork clip (3) between the tooth (10c) of the second ending portion (10b) of the tab (10) and the second wall (10) so as to prevent the tab (10) from slipping out of the slot (20).

On the contrary, in order to uncouple the two walls (1, 2), it will be simply necessary to remove the fork clip (3) and then pull the tab (10) out of the slot (20).

In addition, by using wood (fork clip (3) and the first walls (1)) and cardboard (second walls (2)) as materials for the construction of the container, the container (100) is both economical and environmentally friendly.

Finally, it is important to point out that even if, until now, the container (100) has always been shown to consist of the two first walls (1) made of wood and the two second walls (2) (made of cardboard), there is nothing to prevent the inventive idea underlying this invention from being advantageously used, without departing from the same inventive idea, also for the connection of combinations of other walls.

This means that if the aforementioned main inventive idea is to have a stable but at the same time reversible connection, then it is evident that a similar logic can also be used for the realization of containers comprising walls that are entirely made of wood or also for containers with walls made of plastic or other materials.

It is clear that in the latter case the containers will no longer be ecological.

Numerous variations and detailed modifications may be made to the present embodiment of the invention, which are within the reach of a skilled person in the art, but in any case the scope of the invention is defined by the appended claims.

## Claims

1. Container (100) comprising a plurality of walls (1, 2) that define a compartment; said plurality of walls (1, 2) comprising at least two adjacent walls, namely a first wall (1) and a second wall (2); said container (100) comprising connection means disposed between the two walls (1, 2) and suitably configured to connect the two walls (1, 2);
wherein said connection means comprise:
- a slot (20) obtained on the second wall (2);
- a tab (10) obtained on the first wall (1) and inserted in said slot (20); said tab (10) comprising a first portion (10a) disposed in the slot (20) and a second ending portion (10b) that protrudes from the slot (20); and
- a clip (3) fastened to the second ending portion (10b) of the tab (10) in such a way that the clip (3) prevents the tab (10) from coming out of the slot (20), wherein said clip (3) is fastened to the second ending portion (10b) of the tab (10);
**characterized in that**:
- said second ending portion (10b) comprises a tooth (10c);
- said clip is a forked-shaped clip (3) and is fastened in intermediate position between the tooth (10c) and the second wall (2); said tooth (10c) and said second wall (2) of the container (100) being engaged against two opposite faces (3a, 3b) of the fork-shaped clip (3).

2. The container (100) of claim 1, wherein said fork-shaped clip (3) consists in a plate with a cut (31) that defines two lateral prongs (32) and a central portion (33) that joins the two lateral prongs (32) on the fork-shaped clip (3).

3. The container (100) according to any one of the preceding claims, wherein said second ending portion (10b) of the tab (10) comprises a recess (10i) defined on one side by said tooth (10c); wherein said fork-shaped clip (3) is at least partially inserted in said recess (10i).

4. The container (100) according to any one of the preceding claims, wherein said fork-shaped clip (3) is made of wood.

5. The container (100) according to any one of the preceding claims, wherein said first wall (1) is made of wood.

6. The container (100) according to any one of the preceding claims, wherein said second wall (2) is made of cardboard.

7. The container (100) according to any one of the preceding claims, wherein said tab (10) has two opposite lateral faces (f2), a top face (f3) that joins the two lateral faces (f2) on the top, and a lower face (f1) that joins the two lateral faces (f2) on the bottom; wherein said at least one tooth (10c) is obtained in one of the two lateral faces or on the top face of the tab (10).

8. The container (100) of claim 6, wherein said tooth (10c) continuously extends along the two lateral faces and along the top face of the tab (10).

9. The container (100) according to any one of the preceding claims, comprising two opposite first walls (1), two opposite second walls (2) and a bottom wall (F); wherein said container (100) comprises:
- two opposite panels, each one of them comprising two lateral edges, a lower edge, and an upper edge; said panels defining said first walls (1) of the container (100); wherein said tab (10) of the connection means is obtained on each lateral edge of the panel;
- a flexible sheet element that is substantially folded in a U-shape and defines the bottom wall (F) and the two second walls (2); wherein a slot (20) for each tab (10) is obtained on said flexible sheet; and
- a fork-shaped clip (3) for each tab (20).

10. The container (100) of claim 9, wherein said two panels are wooden panels and said flexible sheet element is a folded cardboard blank piece.

## Patentansprüche

1. Behälter (100), umfassend eine Vielzahl von Wänden (1, 2), die einen Raum begrenzen; wobei die Vielzahl von Wänden (1, 2) mindestens zwei benachbarte Wände umfassen, insbesondere eine erste Wand (1) und eine zweite Wand (2); wobei der Behälter (100) Verbindungsmittels umfasst, die zwischen den beiden Wänden (1, 2) angeordnet sind und so gestaltet sind, dass sie die beiden Wände (1, 2) miteinander verbinden;
wobei die Verbindungsmittel Folgendes umfassen:
- einen Schlitz (20), der auf der zweiten Wand (2) herausgearbeitet ist;
- eine Lasche (10), die auf der ersten Wand (1) herausgearbeitet ist und in den Schlitz (20) eingesteckt ist; wobei die Lasche (10) einen ersten Abschnitt (10a) umfasst, der in dem Schlitz (20) angeordnet ist, und einen zweiten Endabschnitt (10b), der aus dem Schlitz (20) vorsteht; und
- eine Klammer (3), die an dem zweiten Endabschnitt (10b) der Lasche (10) so befestigt ist, dass die Klammer (3) verhindert, dass die Lasche (10) sich aus dem Schlitz (20) löst; wobei die Klammer (3) an dem zweiten Endabschnitt (10b) der Lasche (10) befestigt ist;
**dadurch gekennzeichnet, dass**:
- der zweite Endabschnitt (10b) einen Zahn (10c) umfasst;
- die Klammer eine gabelförmige Klammer (3) ist und in einer Position zwischen dem Zahn (10c) und der zweiten Wand (2) befestigt ist; wobei der Zahn (10c) und die zweite Wand (2) des Behälters (100) gegen die beiden sich gegenüberliegenden Seiten (3a, 3b) der gabelförmigen Klammer (3) in Eingriff stehen.

2. Behälter (100) nach Anspruch 1, wobei die gabelförmige Klammer (3) aus einer Platte mit einem Einschnitt (31) besteht, der auf der gabelförmigen Klammer (3) zwei seitliche Zinken (32) und einen zentralen Abschnitt (33) definiert, der die beiden seitlichen Zinken (32) verbindet.

3. Behälter (100) nach einem der vorstehenden Ansprüche, wobei der zweite Abschnitt (10b) der Lasche (10) eine Ausnehmung (10i) umfasst, die auf einer Seite von dem Zahn (10c) begrenzt wird; wobei die gabelförmige Klammer (3) mindestens teilweise in die Ausnehmung (10i) eingesteckt ist.

4. Behälter (100) nach einem der vorstehenden Ansprüche, wobei die gabelförmige Klammer (3) aus Holz ist.

5. Behälter (100) nach einem der vorstehenden Ansprüche, wobei die erste Wand (1) aus Holz ist.

6. Behälter (100) nach einem der vorstehenden Ansprüche, wobei die zweite Wand (2) aus Karton ist.

7. Behälter (100) nach einem der vorstehenden Ansprüche, wobei die Lasche (10) zwei gegenüberliegende seitliche Flächen (f2) aufweist, eine obere Fläche (f3), die die beiden seitlichen Flächen (f2) oberseitig verbindet, und eine untere Fläche (f1), die die beiden seitlichen Flächen (f2) unterseitig verbindet; wobei mindestens ein Zahn (10c) in einer der beiden seitlichen Flächen oder auf der oberen Fläche der Lasche (10) herausgearbeitet ist.

8. Behälter (100) nach Anspruch 6, wobei der Zahn (10c) sich ohne Unterbrechung entlang der beiden seitlichen Flächen und entlang der oberen Fläche der Lasche (10) erstreckt.

9. Behälter (100) nach einem der vorstehenden Ansprüche, umfassend zwei gegenüberliegende erste Wände (1), zwei gegenüberliegende zweite Wände (2) und eine Bodenwand (F); wobei der Behälter (100) Folgendes umfasst:
- zwei gegenüberliegende Platten, die jeweils zwei Seitenkanten, eine untere Kante und eine obere Kante umfassen; wobei die Platten die ersten Wände (1) des Behälters (100) definieren; wobei die Lasche (10) der Verbindungsmittel a jeder Seitenkanten der Platte herausgearbeitet ist;
- ein flexibles Folienelement, das im Wesentlichen U-förmig gebogen ist und die Bodenwand (F) und die beiden zweiten Wände (2) definiert; wobei ein Schlitz (20) für jede Lasche (10) in der flexiblen Folie herausgearbeitet ist; und
- eine gabelförmige Klammer (3) für jede Lasche (10).

10. Behälter (100) nach Anspruch 9, wobei die beiden Platten Holzplatten sind und das flexible Folienelement ein Kartonstanzstück ist.

## Revendications

1. Conteneur (100) comprenant une pluralité de parois (1, 2) qui délimitent un compartiment ; ladite pluralité de parois (1, 2) comprenant au moins deux parois adjacentes entre elles, dont une première paroi (1) et une seconde paroi (2) ; ledit conteneur (100) comprenant des moyens de connexion, disposés entre les deux parois (1, 2), conformés de manière telle à relier les deux parois (1, 2) entre elles ;
où lesdits moyens de connexion comprennent :
- une fente (20) réalisée sur la seconde paroi (2) ;
- une languette (10) réalisée sur la première paroi (1) et enfilée dans ladite fente (20) ; ladite languette (10) comprenant une première portion (10a) disposée dans la fente (20) et une seconde portion (10b) terminale qui déborde de la fente (20) ; et
- un clip (3) accroché à la seconde portion (10b) de la languette (10) de manière que le clip (3) empêche à la languette (10) de sortir de la fente (20) ; où ledit clip (3) est accroché à la seconde portion (10b) de la languette (10) ;
**caractérisé en ce que**:
- ladite seconde portion terminale (10b) comprend une dent (10c) ;
- ledit clip est un clip du type à fourche (3) et il est accroché sur une position interposée entre la dent (10c) et la seconde paroi (2) ; ladite dent (10c) et ladite seconde paroi (2) du conteneur (100) s'engageant contre deux faces (3a, 3b) opposées du clip à fourche (3).

2. Récipient (100) selon la revendication 1, où ledit clip à fourche (3) consiste en une plaquette comprenant une entaille (31) qui définit sur le clip à fourche (3) deux pattes latérales (32) et une portion centrale (33) qui relie les deux pattes latérales (32).

3. Conteneur (100) selon l'une quelconque des revendications précédentes, où ladite seconde portion (10b) de la languette (10) comprend une partie creuse (10i) délimitée d'un côté par la susdite dent (10c) ; où ledit clip à fourche (3) est inséré, au moins partiellement, dans ladite partie creuse (10i).

4. Conteneur (100) selon l'une quelconque des revendications précédentes, où ledit clip à fourche (3) est en bois.

5. Conteneur (100) selon l'une quelconque des revendications précédentes, où ladite première paroi (1) est en bois.

6. Conteneur (100) selon l'une quelconque des revendications précédentes, où ladite seconde paroi (2) est en carton.

7. Conteneur (100) selon l'une quelconque des revendications précédentes, où ladite languette (10) a deux faces latérales (f2) opposées, une face de sommet (f3) qui relie supérieurement les deux faces latérales (f2), et une face inférieure (f1) qui relie inférieurement les deux faces latérales (f2) ; où ladite au moins une dent (10c) est réalisée en correspondance d'une des deux faces latérales ou sur la face de sommet de la languette (10).

8. Conteneur (100) selon la revendication 6, où ladite dent (10c) se déploie en continu le long des deux faces latérales et le long de la face de sommet de la languette (10).

9. Conteneur (100) selon l'une quelconque des revendications précédentes, comprenant deux premières parois (1) opposées entre elles, deux secondes parois (2) opposées entre elles et une paroi de fond (F) ; où ledit conteneur (100) comprend :
- deux panneaux opposés, chacun comprenant deux bords latéraux, un bord inférieur et un bord supérieur ; lesdits panneaux définissant lesdites premières parois (1) du conteneur (100) ; où, sur chaque bord latéral du panneau, est réalisée la susdite languette (10) des moyens de connexion ;
- un élément en feuille flexible plié pratiquement en forme de « U » définissant la paroi de fond (F) et les deux secondes parois (2) ; où sur ladite feuille flexible, une fente (20) est réalisée pour chaque languette (10) ; et
- un clip à fourche (3) pour chaque languette (10).

10. Conteneur (100) selon la revendication 9, où les deux dits panneaux sont des panneaux en bois et ledit élément en feuille flexible est une pièce découpée en carton.
